# EUROPEAN PATENT SPECIFICATION

(11) **EP 0 724 704 B1**
(45) Date of publication and mention of the grant of the patent: **10.12.1997**
(21) Application number: 94929611.5
(22) Date of filing: 17.10.1994
(51) Int. Cl.: F25D 17/06, A47F 3/04

(54) **A CONTROLLED ENVIRONMENT CONTAINER**
BEHÄLTER MIT REGELUNG DER INWENDIGEN ATMOSPHÄRISCHEN BEDINGUNGEN
RECIPIENT DE CONSERVATION A ATMOSPHERE CONTROLEE

(30) Priority: 18.10.1993 GB 9321439
(43) Date of publication of application: 07.08.1996
(73) Proprietor: Mars G.B. Limited, Slough Berkshire SL1 4LG (GB)
(72) Inventor: Wingate, Barry, San José, CA 95124 (US); Peeples, Kathleen, Gay, Houston, TX 77006 (US); Wickman, John, Anthony, Houston, TX 77042 (US); Kenaghan, Peter, Francis, Hampshire RC27 9RD (GB); Mars, Frank, Edward, Glenmore, PA 19343 (US)
(74) Representative: Jackson, Richard Eric
(86) International application number: GB9402266
(87) International publication number: WO9510964

(56) References cited:
- EP-A- 0 201 182
- EP-A- 0 334 414
- CH-A- 158 778
- DE-C- 1 036 878
- US-A- 2 145 892
- US-A- 4 662 186

## Description

This invention relates to controlled environment containers, and in particular to a vertical modular container system for storing items in a controlled environment.

Prior art freezers or chill cabinets are well known for storing frozen products, such as ice cream, or simply fresh products which deteriorate in warm weather. Such fresh products may include confectionery, which can melt if overheated.

Known prior art freezers and chill cabinets tend always to have openings, possibly closed with doors, on top. This is to prevent the cold air within the container from "falling out" of the container each time the door is opened. In this way, energy can be conserved because cold air does not need to be replaced every time an item is removed from the container.

US-A-2145892 discloses a controlled environment container comprising a drawer for receiving items to be stored and a temperarure control device for controlling the internal air temperature in the drawer via an air flow path through the drawer, access to items stored in the drawer being obtained via an aperture in a side of the container, wherein the drawer can slide between a first position closing the aperture and opening the air flow path through the drawer and a second position opening the aperture and closing the air flow path through the drawer.

Although the aforementioned prior art containers are acceptable and widely used, they do not display the items within the container particularly well nor can they be readily enlarged in storage volume. Accordingly, the present invention aims to improve upon these prior art containers.

In the light of the foregoing, the present invention provides a controlled environment container comprising a pivoted drum for receiving items to be stored and a temperature control device for controlling the internal air temperature in the drum via an air flow path through the drum, access to items stored in the drum being obtained via an aperture in a side of the container, wherein the pivoted drum can rotate between a first position closing the aperture and opening the air flow path through the drum and a second position opening the aperture and closing the air flow path through the drum. As a result, any loss of conditioned air from the container is severely reduced.

The air flow path preferably passes through the drum when the aperture is closed and is re-directed via a by-pass channel when the aperture is open.

The drum preferably includes an obstruction which closes the by-pass channel when the drum is in its first position and the aperture is closed. Furthermore, the obstruction preferably abuts against an upper seal when the drum is in its second position to prevent ambient air in the remainder of the container from escaping out of the open aperture.

The drum also preferably abuts against the upper seal when closed, thereby preventing external air from entering the container.

A lower seal is preferably provided for abutment by the drum to prevent internal air escaping from the container below the drum. Side seals are also preferably provided in the modular storage unit for abutment by flanges of the drum in both its first position and its second position to prevent the release of ambient air from within the container and the introduction of external air from outside the container.

The drum may include a removable product storage support for receiving items to be stored. By including the product storage support, which may remain stationary when in the modular storage unit, the items being stored are not rotated every time the drum is rotated.

The drum will preferably rotate automatically when released to close the aperture.

In a particular embodiment, the container may comprise a base unit, a top unit and a modular storage unit accomodating the pivoted drum disposed vertically between the base unit and the top unit, the base unit or the top unit or both including the temperature control device.

By being of modular construction, such a container can be readily expanded simply by adding modular storage units between the base and the top unit. Accordingly, in a particular embodiment of the present invention, a plurality of modular storage units are stacked vertically between the base unit and the top unit.

Preferably the air flow path passes from the top unit through the or each modular storage unit into the base unit and back to the top unit via a return passage at the rear of each modular storage unit.

A temperature control device is preferably situated solely in the top unit. If this is the case, cold air produced by the temperature control device may simply fall under gravity through the or each modular storage unit. Alternatively, the cold air may be driven through the air flow passage and return through the module storage units.

The temperature control device may be a thermo-electric cooling engine, a set of eutectic plates or cold packs, a modular chiller, freezer, warmer or heater. Any other appropriate temperature control device could equally well be used.

A surface seal is preferably provided between each unit of the container to isolate the air flow path from external air outside the container.

Each unit is preferably shaped to receive an adjacent unit in a locking formation, full locking of adjacent units being effected by one or more fastenings at the rear of the container.

A bracket may be provided at the rear of the container to enable the container to be mounted on a wall or other vertical support. Alternatively, the base unit may be filled with ballast or otherwise secured to increase the stability of the container when erected on a horizontal surface.

Although it is envisaged that a container according to the present invention will be used as a cooler for confectionery, the container could be used for storing any other goods or could be used as a freezer to keep frozen goods. Furthermore, the container could be used as a heater to keep items, such as pies and the like, hot during display. The use of the container will simply be dictated by the type of temperature control device incorporated in the container.

A specific embodiment of the present invention is now described, by way of example only, with reference to the accompanying drawings, in which:-
Figure 1 is a perspective view of a modular cooler according to the present invention;
Figure 2 is a perspective rear view of a modular storage unit of the type shown in Figure 1;
Figure 3 is a sectional side view of a cooler as shown in Figure 1, except that two modular storage units are included;
Figure 4 is a cut away side view of a single modular storage unit as shown in Figure 2 essentially showing a side view of the drum.

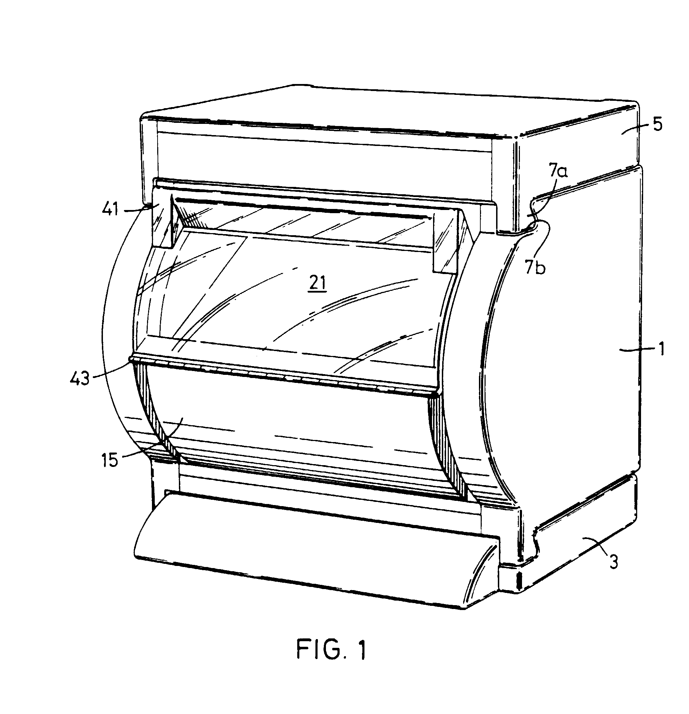

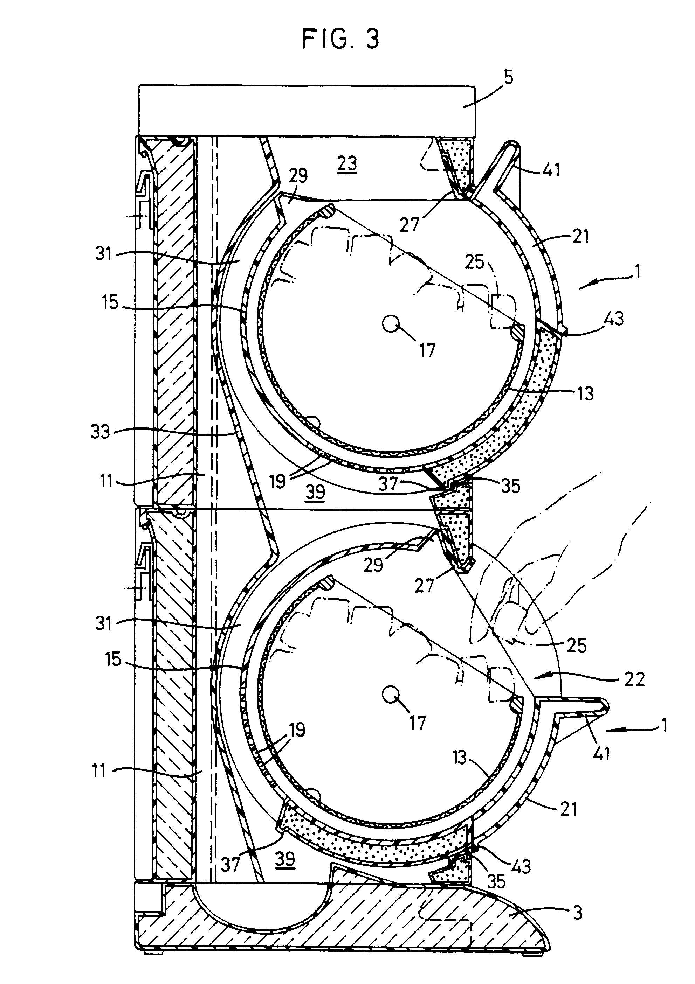

With reference to the accompanying drawings, a container having a single modular storage unit 1 (cf. Figure 1) or two modular storage units 1 (cf. Figure 3) are shown. Each container has a base unit 3 and a top unit 5 stacked vertically in modular fashion with the storage unit(s) 1 positioned therebetween. If the container is intended to stand on a counter or the like, the base unit 3 may be filled with some form of ballast, or otherwise secured to provide stability to the container.

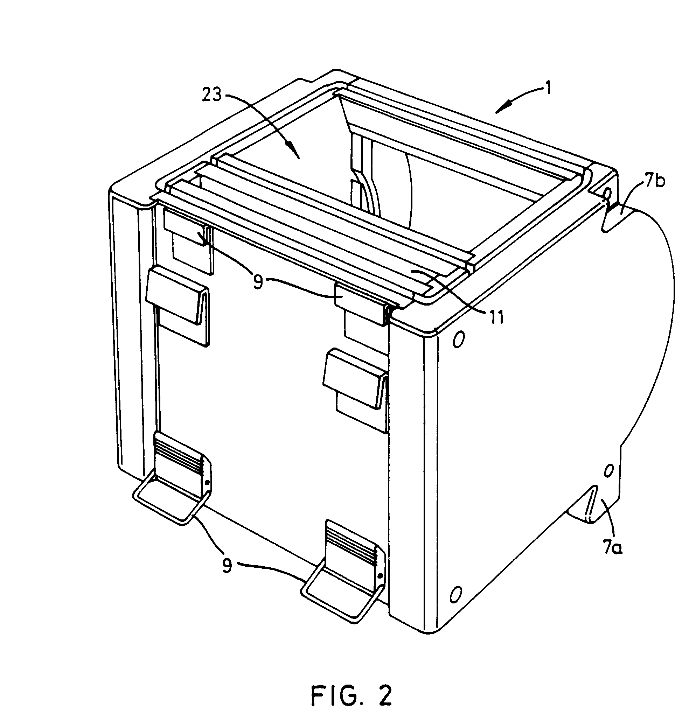

Adjacent units of the container inter-engage by means of locking formations 7a, 7b formed at the front corners of each unit and simple clips 9 acting between adjacent units at the rear of the units (cf. Figure 2). Surface seals (not shown) are provided between the units to prevent the ingress of external air into the container.

A thermo-electric cooling engine (not shown) is accommodated in the top unit 5 and is powered by an electrical supply (not shown). Any other suitable cooling system could equally well be used. Furthermore, since the type of thermc-electric cooling engine does not form a part of the present invention, it will not be described in any detail other than to say that it provides a supply of cool air which is either pumped or falls under gravity through the modular storage units 1 to the base unit 3 and recirculates via a return passage 11 back to the top unit 5. When the air returns to the top unit 5, it is slightly warmer and is either expelled from the device through rear vents or recirculated via the cooling engine back around the system.

Each modular storage unit 1 includes a wire basket 13 for receiving confectionery to be chilled. The wire basket 13 remains essentially stationery when positioned in the storage unit 1. A partially cut away drum 15 surrounds the basket 13 and is able to pivot about an axis 17. The drum 15 includes a plurality of apertures 19 on its lower side through which air may pass. A window 21, which closes an aperture 22, is integral with the drum 15 and rotates around the pivot axis 17 when the drum 15 rotates. As can be seen from Figure 3, when cool air is released from the top unit 5, it falls into the drum 15 through an upper opening 23 in the storage unit 1. The cool air therefore also falls into the basket 13 and cools the confectionery 25 stored therein. The air is then free to fall out of the basket 13 through the apertures 19 and on into an adjacent unit 1.

When the drum is in its closed position, its free end abuts an upper seal 27 mounted on a portion of the storage unit 1. This prevents any unwanted loss of cooled air. The cool air falls into the drum 15 because an obstruction 29 on the drum 15 prevents the air from passing down a by-pass passage 31 between the drum 15 and an internal wall 33 of the storage unit 1. A lower seal 35 is also provided mounted on a portion of the storage unit 1 against which a protrusion 37 of the drum 15 abuts when the aperture 22 is closed. In this way, cool air entering the storage unit 1 is used solely to cool the confectionery 25 within the basket 13 before leaving the storage unit 1 via a lower aperture 39. Furthermore, the warmer air outside the storage unit 1 cannot enter the storage unit 1 due to the inclusion of seals 27 and 35.

As can be seen from the lower portion of Figure 3, when a piece of confectionery is to be removed from the storage unit 1, the aperture 22 is opened by rotating the drum 15 about pivot axis 17 by means of a handle 41. When the aperture 22 is opened, a protruberance 43 between the window 21 and the drum 15 abuts the lower seal 35 and the obstruction 29 of the drum 15 abuts the upper seal 27. When this occurs, the cool air leaving the upper storage unit 1 cannot enter the drum 15 of the lower storage unit 1 because the obstruction 29 directs the cool air into the by-pass channel 31. Thus, there is no pressure from the cool air falling from the upper storage unit forcing the cool air in the lower storage unit 1 out of the open aperture 22 of the lower storage unit 1. Hence, there is little loss of cool air from the lower storage unit 1. Furthermore, since the aperture 22 is only opened by rotation of the drum 15, there is no wafting of hot air from outside the storage unit 1 or cool air from inside the storage unit 1 out of the open aperture 22 during rotation of the drum 15. A significant reduction in the loss of cool air is thereby effected by means of the arrangement shown in Figure 3 of the drawings.

As will be appreciated, if the aperture 22 of the upper storage unit 1 was opened rather than the aperture 22 of the lower storage unit 1, the cool air from the top unit 5 would pass down the by-pass channel 31 of the upper storage unit 1 and then through the drum 15 of the lower storage unit 1 rather than vice versa as shown in Figure 3 of the drawings.

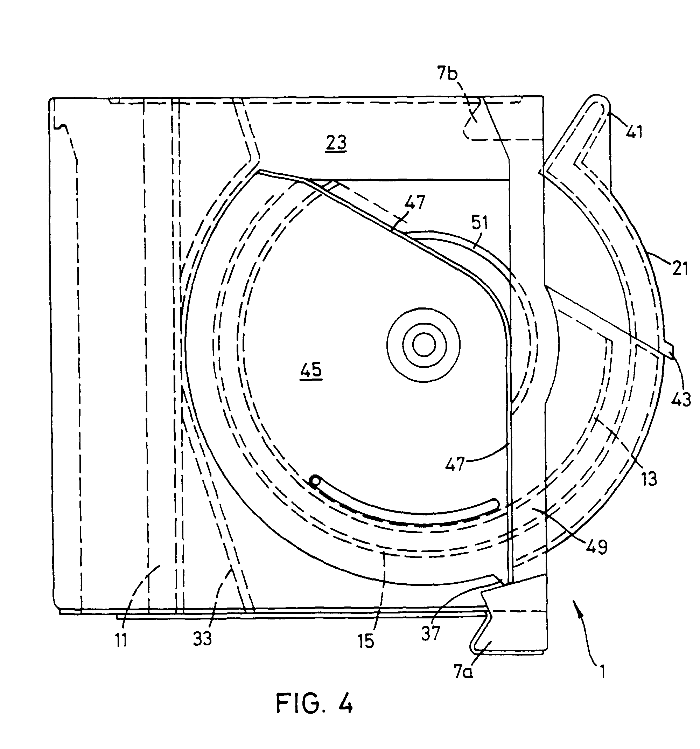

With reference to Figure 4 of the drawings, each side wall 45 of the drums 15 includes an outwardly extending flange 47 which abuts a side seal 49 to prevent loss of cool air from the storage units 1 along this edge. The drum 15 likewise abuts the side seal 49 to seal the storage device 1. When the aperture 22 is open, a different portion of the flange 47 abuts the side seal 49 and a different portion of the drum 15 also abuts the side seal 49, but once again a reliable seal is provided to prevent the ingress of warm air from outside the storage unit 1. Additionally, a concentric seal 51 is provided to close the small remaining gap between the side seal 49 and the drum 15 in either position. Other seal arrangements can, of course, alternatively be envisaged or used.

Although modular containers having one or two storage units have been described and shown, any number of storage units 1 could be included in a single system, as appropriate. Furthermore, although a particular form of locking mechanism between the various units has been described herein, other forms of inter-engagement between the units, which are equally easy to use, can also be envisaged by a man skilled in the art.

It will of course be understood that the present invention has been described above purely by way of example, and that modifications of detail can be made within the scope of the invention.

## Claims

1. A controlled environment container comprising a pivoted drum (15) for receiving items (25) to be stored and a temperature control device for controlling the internal air temperature in the drum (15) via an air flow path through the drum (15), access to items (25) stored in the drum (15) being obtained via an aperture (22) in a side of the container, wherein the pivoted drum (15) can rotate between a first position closing the aperture (22) and opening the air flow path through the drum (15) and a second position opening the aperture (22) and closing the air flow path through the drum (15).

2. A container as claimed in claim 1, wherein the air flow path passes through the drum (15) when the aperture (22) is closed and is re-directed through a by-pass channel (31) when the aperture (22) is open.

3. A container as claimed in claim 2, wherein the drum (15) provides an obstruction (29) which closes the by-pass channel (31) when the drum (15) is in its first position and the aperture (22) is closed.

4. A container as claimed in claim 3, wherein the obstruction (29) abuts against an upper seal (27) when the drum (15) is in its second position to prevent the internal air in the remainder of the container from escaping out of the open aperture (22).

5. A container as claimed in claim 4, wherein the drum (15) abuts against the upper seal (27) when closed, thereby preventing external air from entering the container.

6. A container as claimed in any preceding claim, wherein a lower seal (35) is provided for abutment by the drum (15) to prevent internal air escaping from the container below the drum (15).

7. A container as claimed in claim 6, wherein the drum (15) abuts against the lower seal (35) when closed, thereby preventing external air from entering the container.

8. A container as claimed in any preceding claim, wherein side seals (49) are provided for abutment by flanges (47) of the drum (15) in both its first position and its second position to prevent the escape of internal air from within the container and the entry of external air into the container.

9. A container as claimed in any preceding claim, wherein the drum (15) includes a removable product storage support (13).

10. A container as claimed in any preceding claim, comprising a base unit (3), a top unit (5) and a modular storage unit (1) accommodating the pivoted drum (15) disposed vertically between the base unit and the top unit, the base unit (3) or the top unit (5) or both including the temperature control device.

11. A container as claimed in claim 10, wherein a plurality of modular storage units (1) are stacked vertically between the base unit (3) and the top unit (5).

12. A container as claimed in claim 10 or claim 11, wherein the air flow path passes from the top unit (5) through the modular storage unit (1) into the base unit (3) and back to the top unit (5) via a return passage (11) at the rear of the modular storage unit (1).

13. A container as claimed in any one of claims 10 to 12, wherein the temperature control device is situated solely in the top unit (5).

14. A container as claimed in any one of claims 10 to 13, wherein the temperature control device is a thermo-electric cooling engine, a set of eutectic plates or cold packs, a modular chiller, freezer, warmer or heater.

15. A container as claimed in any one of claims 10 to 14, wherein a surface seal is provided between each unit (1,3,5) of the container to isolate the air flow path from air external to the container.

16. A container as claimed in any one of claims 10 to 15, wherein each unit (1,3,5) is shaped to receive an adjacent unit in a locking formation, full locking of adjacent units being effected by one or more clip(s) (9) at the rear of the container.

17. A container as claimed in any preceding claim, wherein a bracket is provided at the rear of the container for mounting the container on a wall or other vertical support.

18. A container as claimed in any preceding claim, wherein ballast is used to increase the stability of the container.

19. A container as claimed in any preceding claim, wherein the container is a cooler for confectionery (25).

## Patentansprüche

1. Behälter mit kontrollierten inwendigen atmosphärischen Bedingungen, der eine schwenkbare Trommel (15) zum Aufnehmen von aufzubewahrenden Gegenständen sowie eine Temperatursteuervorrichtung zum Steuern der inneren Lufttemperatur in der Trommel (15) über einen Luftströmungsweg durch die Trommel (15) aufweist, wobei der Zugang zu in der Trommel (15) gelagerten Gegenständen (25) über eine Öffnung (22) in einer Seite des Behälters erhalten wird, und wobei sich die schwenkbare Trommel (15) zwischen einer ersten Position, in der sie die Öffnung (22) verschließt und den Luftströmungsweg durch die Trommel (15) öffnet, und einer zweiten Position, in der sie die Öffnung (22) öffnet und den Luftströmungsweg durch die Trommel (15) verschließt, drehen kann.

2. Behälter nach Anspruch 1, dadurch gekennzeichnet, daß der Luftströmungsweg durch die Trommel (15) verläuft, wenn die Öffnung (22) geschlossen ist, und durch einen Bypasskanal (31) umgeleitet wird, wenn die Öffnung (22) offen ist.

3. Behälter nach Anspruch 2, dadurch gekennzeichnet, daß die Trommel (15) eine Versperrung (29) aufweist, die den Bypasskanal (31) schließt, wenn sich die Trommel (15) in ihrer ersten Position befindet und die Öffnung (22) geschlossen ist.

4. Behälter nach Anspruch 3, dadurch gekennzeichnet, daß die Versperrung (29) gegen eine obere Dichtung (27) anstößt, wenn sich die Trommel (15) in ihrer zweiten Position befindet, um zu verhindern, daß umgebende Luft im übrigen Teil des Behälters aus der offenen Öffnung (22) entweicht.

5. Behälter nach Anspruch 4, dadurch gekennzeichnet, daß die Trommel (15), wenn sie geschlossen ist, gegen die obere Dichtung (27) anstößt, wodurch verhindert wird, daß Außenluft in den Behälter eintritt.

6. Behälter nach einem der vorangehenden Ansprüche, dadurch gekennzeichnet, daß eine untere Dichtung (35) vorgesehen ist, an die die Trommel (15) anstößt, um zu verhindern, daß Innenluft unterhalb der Trommel (15) aus dem Behälter entweicht.

7. Behälter nach Anspruch 6, dadurch gekennzeichnet, daß die Trommel (15), wenn sie geschlossen ist, gegen die untere Dichtung (35) anstößt, wodurch verhindert wird, daß Außenluft in den Behälter eintritt.

8. Behälter nach einem der vorangehenden Ansprüche, dadurch gekennzeichnet, daß seitliche Dichtungen (59) vorgesehen sind, gegen die Flansche (47) der Trommel (15) sowohl in ihrer ersten Position als auch in ihrer zweiten Position anstoßen, um zu vermeiden, daß Innenluft aus dem Behälter austritt und Außenluft in den Behälter eintritt.

9. Behälter nach einem der vorangehenden Ansprüche, dadurch gekennzeichnet, daß die Trommel (15) einen herausnehmbaren Produktlagerungsträger (13) aufweist.

10. Behälter nach einem der vorangehenden Ansprüche, mit einer Sockeleinheit (3), einer oberen Einheit (5) und einer modularen Lagerungseinheit (1), die die senkrecht zwischen der Sokkeleinheit und der oberen Einheit angeordnete, schwenkbare Trommel (15) aufnimmt, wobei die Sockeleinheit (3) oder die obere Einheit (5) oder beide die Temperatursteuervorrichtung enthalten.

11. Behälter nach Anspruch 10, dadurch gekennzeichnet, daß eine Anzahl von modularen Lagerungseinheiten (1) vertikal zwischen der Sockeleinheit (3) und der oberen Einheit (5) aufeinandergesetzt sind.

12. Behälter nach Anspruch 10 oder 11, dadurch gekennzeichnet, daß der Luftströmungsweg von der oberen Einheit (5) durch die modulare Lagerungseinheit (1) in die Sockeleinheit (3) und zurück zur oberen Einheit (5) über einen Rücklaufdurchlaß (11) an der Rückseite der modularen Lagerungseinheit (1) verläuft.

13. Behälter nach einem der Ansprüche 10 bis 12, dadurch gekennzeichnet, daß die Temperatursteuervorrichtung lediglich in der oberen Einheit (5) angeordnet ist.

14. Behälter nach einem der Ansprüche 10 bis 13, dadurch gekennzeichnet, daß die Temperatursteuervorrichtung eine thermoelektrische Kältemaschine, ein Satz eutektischer Platten oder Kältepackungen, ein modulares Kühl-, Gefrier-, Wärme- oder Beheizungsgerät ist.

15. Behälter nach einem der Ansprüche 10 bis 14, dadurch gekennzeichnet, daß sich eine Oberflächendichtung zwischen jeder Einheit des Behälters befindet, um den Luftströmungsweg von Luft außerhalb des Behälters zu isolieren.

16. Behälter nach einem der Ansprüche 10 bis 15, dadurch gekennzeichnet, daß jede Einheit so geformt ist, daß sie eine benachbarte Einheit in einer Verriegelungsausformung aufnimmt, wobei eine vollständige Verriegelung benachbarter Einheiten durch ein oder mehrere Klemmteil(e) (9) an der Rückseite des Behälters erzielt wird.

17. Behälter nach einem der vorangehenden Ansprüche, dadurch gekennzeichnet, daß an der Rückseite des Behälters eine Strebe vorgesehen ist, um den Behälter an einer Wand oder einer sonstigen senkrechten Abstützung zu befestigen.

18. Behälter nach einem der vorangehenden Ansprüche, dadurch gekennzeichnet, daß Ballast verwendet wird, um die Stabilität des Behälters zu vergrößern.

19. Behälter nach einem der vorangehenden Ansprüche, dadurch gekennzeichnet, daß der Behälter ein Kühlgerät für Süßwaren (25) ist.

## Revendications

1. Récipient à atmosphère contrôlée comprenant un tambour articulé (15) destiné à recevoir des articles (25) à stocker et un dispositif de commande de température pour commander la température de l'air interne dans le tambour (15) par l'intermédiaire d'un circuit d'écoulement d'air à travers le tambour (15), l'accès aux articles (25) stockés dans le tambour (15) étant obtenu par l'intermédiaire d'un orifice (22) ménagé dans une face du récipient, dans lequel le tambour articulé (15) peut tourner entre une première position de fermeture de l'orifice (22) et d'ouverture du circuit d'écoulement d'air à travers le tambour (15) et une seconde position d'ouverture de l'orifice (22) et de fermeture du circuit d'écoulement d'air à travers le tambour (15).

2. Récipient selon la revendication 1, dans lequel le circuit d'écoulement d'air traverse le tambour (15) lorsque l'orifice (22) est fermé et est redirigé à travers un canal de dérivation (31) quand l'orifice (22) est ouvert.

3. Récipient selon la revendication 2, dans lequel le tambour (15) comporte un organe d'obstruction (29) qui ferme le canal de dérivation (31) quand le tambour (15) est dans sa première position et que l'orifice (22) est fermé.

4. Récipient selon la revendication 3, dans lequel l'organe d'obstruction (29) appuie contre un joint d'étanchéité supérieur (27) quand le tambour (15) est dans sa seconde position, afin d'empêcher l'air interne qui se trouve dans le reste du récipient de s'échapper de l'orifice ouvert (22).

5. Récipient selon la revendication 4, dans lequel le tambour (15) s'appuie contre le joint d'étanchéité supérieur (27) quand il est fermé, empêchant ainsi l'air externe d'entrer dans le récipient.

6. Récipient selon l'une quelconque des revendications précédentes, dans lequel un joint d'étanchéité inférieur (35) est prévu pour que le tambour (15) s'y appuie, afin d'empêcher l'air interne de s'échapper du récipient sous le tambour (15).

7. Récipient selon la revendication 6, dans lequel le tambour (15) s'appuie contre le joint d'étanchéité inférieur (35) quand il est fermé, empêchant ainsi l'air externe d'entrer dans le récipient.

8. Récipient selon l'une quelconque des revendications précédentes, dans lequel des joints d'étanchéité latéraux (49) sont prévus pour que s'y appuient des rebords (47) du tambour (15) à la fois dans sa première position et dans sa seconde position, afin d'empêcher l'échappement de l'air interne de l'intérieur du récipient et l'entrée de l'air externe dans le récipient.

9. Récipient selon l'une quelconque des revendications précédentes, dans lequel le tambour (15) comprend un support amovible (13) de stockage de produit .

10. Récipient selon l'une quelconque des revendications précédentes, comprenant une unité de base (3), une unité supérieure (5) et une unité de stockage modulaire (1) logeant le tambour articulé (15) disposé verticalement entre l'unité de base et l'unité supérieure, l'unité de base (3) ou l'unité supérieure (5) ou les deux comprenant le dispositif de contrôle de température.

11. Récipient selon la revendication 10, dans lequel plusieurs unités de stockage modulaires (1) sont empilées verticalement entre l'unité de base (3) et l'unité supérieure (5).

12. Récipient selon la revendication 10 ou la revendication 11, dans lequel le circuit d'écoulement d'air passe de l'unité supérieure (5), à travers l'unité de stockage modulaire (1), dans l'unité de base (3) et revient vers l'unité supérieure (5) par l'intermédiaire d'un passage de retour (11), à l'arrière de l'unité de stockage modulaire (1).

13. Récipient selon l'une quelconque des revendications 10 à 12, dans lequel le dispositif de contrôle de température n'est situé que dans l'unité supérieure (5).

14. Récipient selon l'une quelconque des revendications 10 à 13, dans lequel le dispositif de contrôle de température est un moteur de refroidissement thermoélectrique, un groupe de plaques eutectiques ou de paquets froids, un compresseur frigorifique modulaire, un congélateur, un réchauffeur ou un dispositif chauffant.

15. Récipient selon l'une quelconque des revendications 10 à 14, dans lequel un joint d'étanchéité superficiel est prévu entre chaque unité (1, 3, 5) du récipient pour isoler le circuit d'écoulement d'air de l'air externe au récipient.

16. Récipient selon l'une quelconque des revendications 10 à 15, dans lequel chaque unité (1, 3, 5) est profilée pour recevoir une unité adjacente dans une formation de verrouillage, le verrouillage complet des unités adjacentes étant effectué par une ou plusieurs attaches (9), à l'arrière du récipient.

17. Récipient selon l'une quelconque des revendications précédentes, dans lequel un support est prévu à l'arrière du récipient pour monter le récipient sur une paroi ou sur un autre support vertical.

18. Récipient selon l'une quelconque des revendications précédentes, dans lequel on utilise un ballast pour augmenter la stabilité du récipient de conservation.

19. Récipient selon l'une quelconque des revendications précédentes, dans lequel le récipient est un refroidisseur pour confiserie (25).
